# EUROPEAN PATENT SPECIFICATION

(11) **EP 1 734 843 B1**
(45) Date of publication and mention of the grant of the patent: **18.11.2009**
(21) Application number: 05729447.2
(22) Date of filing: 22.03.2005
(51) Int. Cl.: A44B 19/42

(54) **ZIPPER END SEALING**
PROFILVERSCHLUSSENDEVERSIEGELUNG
VERROUILLAGE D'EXTREMITE DE FERMETURE A GLISSIERE

(30) Priority: 24.03.2004 GB 0406623
(43) Date of publication of application: 27.12.2006
(73) Proprietor: Illinois Tool Works Inc., Glenview, IL 60026 (US)
(72) Inventor: LEIGHTON, Murray, Edward, Bruce, Whitby Bay Tyne And Wear NE26 2BA (GB)
(74) Representative: W.P. Thompson & Co.
(86) International application number: PCT/GB2005/001076
(87) International publication number: WO 2005/092138

(56) References cited:
- EP-A- 0 505 055
- EP-A- 1 364 768
- GB-A- 1 479 997

## Description

The present invention relates to reclosable fasteners of the type know as "zippers". These consist of first and second lengths of material, usually plastics, which are shaped to engage with each other along their lengths and can be released from engagement and repeatedly re-engaged and re-released. The zipper can thus form a reclosable fastener for a container, for example a plastics bag. The individual lengths of material making up the zipper are known as "profiles". The profiles can be engaged by pressing them together and released by pulling them apart. Alternatively, the zipper may be fitted with a slider which is moveable along the zipper to cause engagement and release the profiles upon movement of the slider in first and second opposite directions. These zippers are known as "slider zippers". The present invention is applicable to slider and non-slider zippers.

In the production of a reclosable fastener of the kind just mentioned, it is often desired to join the adjacent ends of two profiles to each other. One reason for this is that the joining of the profiles ensures that they are in register for subsequent engagement along their lengths. This is important in a finished plastics bag because the respective panels of the bag to which the profiles are attached may not be perfectly aligned, causing the zipper profiles to become out of register when disengaged. It is also important when the zippers are attached to a web of plastics film material using the technique known as "cross-web technology", in which the zippers are applied to the web at spaced intervals transverse to the longitudinal direction and direction of movement of the web. When such a web is subsequently fed to a form-fill-seal machine on which bags are formed and simultaneously filled, the profiles, if not joined to each other, can become disengaged when they pass over the forming shoulder of the form-fill-seal machine.

In the past, this joining of the profile lengths has been achieved by various means applied externally of the zipper, including the application of heat, pressure and ultrasonic waves. These means have been applied individually and in combinations.

All these means have the disadvantage that they tend either to damage the zippers being treated, or to result in incomplete or insecure attachment. One reason for this is that the heat, pressure or ultrasonic waves are often applied indirectly to the zippers through a film material to which the zippers are attached, thus making it difficult to apply the heat, etc in the correct quantity. Indirect application also consumes time in a continuous production process.

The present invention aims to overcome, or at least alleviate, these disadvantages.

EP-A-0505055 (Mobil) discloses a method of making protruding end stops on a slider zipper. The ends of the zipper profiles are clamped between clamps having cavities which are shaped to form the end stops. A heated knife forces the zipper material into the cavities, fuses the profile ends together and severs one zipper length from its adjacent length.

The present invention provides a method of joining an end of a pair of zipper profiles, the method comprising:
bringing the zipper profiles into engagement with each other at least over an end portion at which the profiles are to be joined;
introducing a heated probe into the engaged end portions of the zipper profiles in order to form a recess in the zipper profile material in the region of the probe;
withdrawing the probe; and
applying external pressure to the end portion of the zipper.

The external pressure deforms the end portions of the profiles and causes the profiles to become fused together as the recess is closed and melted or softened material in its region solidifies or hardens.

Preferably, the pressure is applied in the absence of external heat.

Advantageously, the pressure is applied as the sole external means of joining the profiles.

Conveniently, the probe is introduced into the profile end portions in a direction substantially longitudinally of the profile lengths.

The probe may take the form of a heated pin.

The method of the invention will often be carried out simultaneously on both ends of the pair of zipper profiles.

The present invention also provides an apparatus for joining the ends of a pair of zipper profiles, the apparatus comprising a means for receiving a pair of zipper profile lengths in engagement with each other at least over an end portion at which the profiles are to be joined, a probe which is movable between a first position in which, in use, it is clear of the engaged profile lengths and a second position in which it has penetrated into the material of the end portions, means for heating the probe, and means for applying external pressure to the zipper profile end portions when the probe is in its first position.

Preferably, the probe is movable between its first and second positions in a direction substantially longitudinally of the profiles.

The apparatus is advantageously provided at both ends of the receiving means for simultaneous treatment of both end of the pair of zipper profiles.

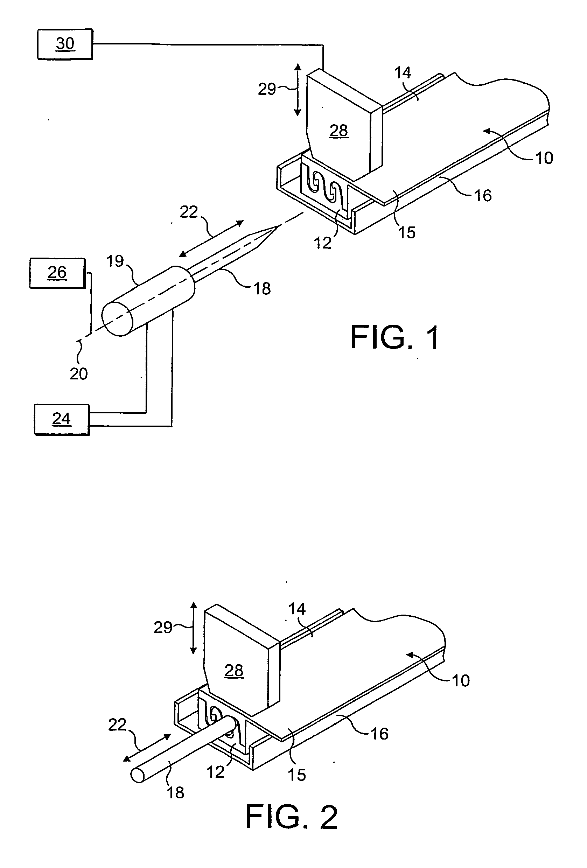

The invention will now be described further by way of example, with reference to the drawing of this specification which shows schematically, in Figures 1 to 5, successive steps in a method of joining the ends of a pair of zipper profiles using an apparatus embodying the invention.

Figure 1 of the drawings shows the end portion of a length of zipper 10 consisting of a first profile 12 and a second profile 14. The profiles are LDPE extrusions.

The profiles 12, 14 are releasably engaged with each other in the condition shown in figure 1. The precise means by which engagement takes place is not shown in detail as it is of no particular relevance to the present invention. Suffice it however to say that the profiles 12, 14 have interengageable formations which can be brought into engagement with each other by pressing the respective profiles together and can be released from engagement with each other by pulling the profiles apart. Engagement and disengagement can take place repeatedly thereby causing the zipper profile strips to form a reclosable fastener.

In the particular embodiment shown, the second profile 14 is formed with a lateral flange 15 which extends longitudinally of the profile. The first profile 12 has no flange. As shown in figure 1, the profiles 12, 14 are received in a groove 16 which retains the zipper length 10. The groove may be, for example, a groove in the surface of a rotary turret forming part of a machine for applying the zipper lengths to a web of plastics material, for example by using "cross-web technology" as referred to above. Alternatively, the groove 16 may form part of a linear applicator which may also form part of a machine for applying zipper lengths to a web of plastics material using "cross-web technology".

Figure 1 also shows a probe in the form of a pin 18 which is movable back and forth along an axis 20, in directions represented by the double-headed arrow 22 in figure 1, the axis 20 extending longitudinally of the groove 16. The pin 18 has an enlarged rear portion 19 which contains an electrical heating element (not shown), energised by a power supply shown schematically as 24. Suitable drive means shown schematically as 26 are provided for movement of the pin 18 from a first position as shown in figure 1 to a second position which is shown in figure 2.

Figure 1 also shows an element 28 for applying external pressure to the end portion of the zipper 10. For this purpose, the element 28 is movable vertically in directions shown by the double-headed arrow 29. A suitable drive means, shown schematically at 30 is provided for this purpose.

Figure 2 of the drawings shows the pin 18 having moved from its first position to its second position and having penetrated into the end portions of the engaged profile strips 12, 14. The pin rear portion 19, power supply 24 and drive means 26, 30 are omitted from figure 2 and subsequent figures in the interests of clarity.

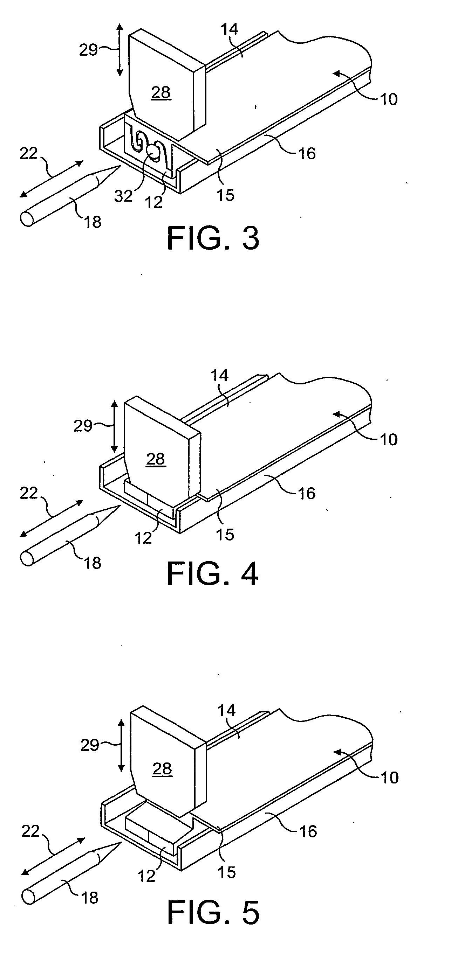

From the position shown in figure 2, the pin is now withdrawn to its first position, as shown in figure 3 of the drawings. It will be seen, as shown schematically in figure 3, that the pin has caused the formation of an approximately cylindrical recess 32 in the end portions of the zipper, the recess being formed preferably by vaporisation of the material of the zipper profiles 12, 14 but possibly also by melting and/or softening of the zipper material. In any event, a certain amount of melting and/or softening occurs in the vicinity of the recess.

The next step in the process is shown in figure 4, in which the pressure element 28 has been moved by the drive means 30 vertically downwards to deform the zipper end portions and press them together, thus closing the cylindrical recess 30 and joining the zipper profile strips 12, 14 to each other. The strips thus become fused together as the melted or softened material solidifies or hardens.

The final stage in the process is shown in figure 5, in which the pressure element 28 has been raised vertically and the zipper profile lengths 12, 14 remain joined to each other and ready for further use, for example by being applied to the plastics web as part of a bag manufacturing process.

In practice, the apparatus described above may be provided at both ends of the groove 16 for simultaneously joining the profiles at both ends of the zipper lengths. In such an arrangement, the power supply 24 and drive means 26, 30 can be common to the two pins 18.

Although described with reference to a non-slider zipper, the invention is also applicable to slider zippers.

## Claims

1. A method of joining an end of a pair of zipper profiles (12, 14), the method comprising:
bringing the zipper profiles into engagement with each other at least over an end portion at which the profiles are to be joined;
**characterised by**:
introducing a heated probe (18) into the engaged end portions of the zipper profiles in order to form a recess (32) in the zipper profile material in the region of the probe;
withdrawing the probe; and
applying external pressure to the end portion of the zipper.

2. A method according to claim 1, in which the pressure is applied in the absence of external heat.

3. A method according to claim 2, in which the pressure is applied as the sole external means of joining the profile end portions.

4. A method according to any preceding claim, in which the probe (18) is introduced into the profile end portions in a direction (20) substantially longitudinally of the profile lengths.

5. A method according to any preceding claim, in which the recess is formed at least partially by vaporisation of the zipper profile material.

6. A method according to any preceding claim carried out simultaneously on both ends of the zipper profiles.

7. An apparatus for joining the ends of a pair of zipper profiles (12, 14), the apparatus comprising a means (16) for receiving a pair of zipper profile lengths in engagement with each other at least over an end portion at which the profiles are to be joined and being **characterised by** a probe (18) which is movable between a first position in which, in use, it is clear of the engaged profile lengths and a second position in which it has penetrated into the material of the end portions, means (24) for heating the probe, and means (28) for applying external pressure to the zipper profile end portions when the probe is in its first position.

8. An apparatus according to claim 7, in which the probe (18) is movable between its first and second positions in a direction (20) substantially longitudinally of the profiles.

9. An apparatus according to claim 7 or 8, in which the heating means comprises an electrical heating element within a rear portion of the probe.

10. An apparatus according to any of claims 7 to 9, including a further said probe, heating means and external pressure means at the opposite end of the receiving means.

## Patentansprüche

1. Verfahren zum Verbinden eines Ende eines Paars Reißverschlussprofile (12, 14), wobei das Verfahren Folgendes umfasst:
Ineingriffbringen der Reißverschlussprofile miteinander mindestens über einen Endabschnitt, an dem die Profile zu verbinden sind,
**dadurch gekennzeichnet, dass**
ein erhitzter Fühler (18) in die in Eingriff stehenden Endabschnitte der Reißverschlussprofile eingeführt wird, um im Bereich des Fühlers eine Ausnehmung (32) im Reißverschlussprofilmaterial zu bilden,
der Fühler herausgezogen wird und
der Endabschnitt des Reißverschlusses mit Außendruck beaufschlagt wird.

2. Verfahren nach Anspruch 1, wobei der Druck ohne externe Hitze ausgeübt wird.

3. Verfahren nach Anspruch 2, wobei der Druck als das einzige externe Mittel zum Verbinden der Profilendabschnitte ausgeübt wird.

4. Verfahren nach einem der vorhergehenden Ansprüche, wobei der Fühler (18) in einer im Wesentlichen längs der Profillängen verlaufenden Richtung (20) in die Profilendabschnitte eingeführt wird.

5. Verfahren nach einem der vorhergehenden Ansprüche, wobei die Ausnehmung mindestens teilsweise durch Verdampfung des Reißverschlussprofilmaterials gebildet wird.

6. Verfahren nach einem der vorhergehenden Ansprüche, das gleichzeitig an beiden Enden der Reißverschlussprofile durchgeführt wird.

7. Vorrichtung zum Verbinden eines Ende eines Paars Reißverschlussprofile (12, 14), wobei die Vorrichtung ein Mittel (16) zur Aufnahme eines Paars Reißverschlussprofillängen, die mindestens über einen Endabschnitt, an dem die Profile verbunden werden sollen, miteinander in Eingriff stehen, **gekennzeichnet durch** einen Fühler (18), der zwischen einer ersten Position, in der er im Gebrauch von den in Eingriff stehenden Profillängen beabstandet ist, und einer zweiten Position, in der er in das Material der Endabschnitte eingedrungen ist, beweglich ist, ein Mittel (24) zum Erhitzen des Fühlers und ein Mittel (28) zur Ausübung von Außendruck auf die Reißverschlussprofilendabschnitte, wenn der Fühler in seiner ersten Position ist.

8. Vorrichtung nach Anspruch 7, wobei der Fühler (18) in einer im Wesentlichen längs der Profile verlaufenden Richtung (20) zwischen seiner ersten und seiner zweiten Position beweglich ist.

9. Vorrichtung nach Anspruch 7 oder 8, wobei das Heizmittel ein elektrisches Heizelement in einem hinteren Abschnitt des Fühlers umfasst.

10. Vorrichtung nach einem der Ansprüche 7 bis 9, einschließlich eines weiteren Fühlers, Heizmittels und Außendruckmittels am gegenüberliegenden Ende des Aufnahmemittels.

## Revendications

1. Procédé pour réunir une extrémité d'une paire de profilés de fermeture à glissière (12, 14), le procédé comprenant les étapes consistant à :
amener les profilés de fermeture à glissière en engagement l'un avec l'autre au moins sur une portion d'extrémité à laquelle les profilés doivent être réunis ;
**caractérisé par** les étapes consistant à :
introduire une sonde chauffée (18) dans les portions d'extrémité engagées des profilés de fermeture à glissière afin de former un retrait (32) dans le matériau des profilés de fermeture à glissière dans la région de la sonde ;
retirer la sonde ; et
appliquer une pression extérieure à la portion d'extrémité de la fermeture à glissière.

2. Procédé selon la revendication 1, dans lequel la pression est appliquée en l'absence de chaleur externe.

3. Procédé selon la revendication 2, dans lequel la pression est appliquée en tant qu'unique moyen externe pour réunir les portions d'extrémité des profilés.

4. Procédé selon l'une quelconque des revendications précédentes, dans lequel la sonde (18) est introduite dans les portions d'extrémité des profilés dans une direction (20) substantiellement longitudinale par rapport aux longueurs des profilés.

5. Procédé selon l'une quelconque des revendications précédentes, dans lequel le retrait est formé au moins en partie par vaporisation du matériau des profilés de fermeture à glissière.

6. Procédé selon l'une quelconque des revendications précédentes, mis en oeuvre simultanément aux deux extrémités des profilés de fermeture à glissière.

7. Appareil pour réunir les extrémités d'une paire de profilés de fermeture à glissière (12, 14), l'appareil comprenant un moyen (16) pour recevoir une paire de longueurs de profilés de fermeture à glissière en engagement l'un avec l'autre sur au moins une portion d'extrémité à laquelle les profilés doivent être réunis et étant **caractérisé par** une sonde (18) qui peut être déplacée entre une première position dans laquelle, pendant l'utilisation, elle est dégagée des longueurs de profilés engagés et une deuxième position dans laquelle elle a pénétré dans le matériau des portions d'extrémité, des moyens (24) pour chauffer la sonde, et des moyens (28) pour appliquer une pression extérieure aux portions d'extrémité des profilés de fermeture à glissière lorsque la sonde est dans sa première position.

8. Appareil selon la revendication 7, dans lequel la sonde (18) peut être déplacée entre ses première et deuxième positions dans une direction (20) substantiellement longitudinale par rapport aux profilés.

9. Appareil selon la revendication 7 ou 8, dans lequel les moyens de chauffage comportent un élément de chauffage électrique dans une portion arrière de la sonde.

10. Appareil selon l'une quelconque des revendications 7 à 9, comportant une telle sonde supplémentaire, des moyens de chauffage et des moyens de pression extérieurs à l'extrémité opposée du moyen de réception.
